# EUROPEAN PATENT APPLICATION

(11) **EP 1 757 518 A1**
(43) Date of publication of application: **28.02.2007**
(21) Application number: 05018333.4
(22) Date of filing: 24.08.2005
(51) Int. Cl.: B62K 15/00

(54) **Foldable bicycle**

(71) Applicant: Pan, Liang-Fong, Lung Ching Hsiang Taichung (TW)
(72) Inventor: Pan, Liang-Fong, Lung Ching Hsiang Taichung (TW)
(74) Representative: Panten, Kirsten

(57) **Abstract**

A foldable bicycle includes a frame for mounting a front wheel unit (1), a rear wheel unit (2), a handlebar (3), a seat (4), a transmission mechanism and a brake system. The frame includes a head tube (10), a top tube (20), a rear tube (30), a bottom tube (40), and a quick release device (50). Thus, the bottom tube and the rear tube are folded upward after the quick release device is unlocked, so that the head tube and the top tube are moved inward to shorten the distance between the front wheel unit and the rear wheel unit, thereby folding the bicycle. In addition, the front wheel unit and the rear wheel unit are movable after the bicycle is folded, so that the bicycle can be moved after being folded, thereby saving the manual work.

## Description

The present invention relates to a foldable bicycle.

A conventional foldable bicycle comprises a frame that can be folded so as to shorten the volume of the bicycle, thereby saving the storage space of the bicycle, and thereby facilitating a user folding the bicycle. However, the conventional foldable bicycle cannot be moved by the user after being folded, so that the user has to carry the folded bicycle by his hands, thereby wasting the manual work.

The closest prior art reference of which the applicant is aware was disclosed in the Taiwanese Patent Publication No. M270980, M266229, M259748 and M256333.

It is an object of the present invention to provide a foldable bicycle that can be moved by the user after being folded, thereby saving the manual work.

This object is accomplished by a foldable bicycle having the features as disclosed in claim 1. Embodiments of the invention are defined by the dependent claims.

In accordance with the present invention, there is provided a foldable bicycle, comprising a frame including a head tube having a bottom for mounting a front wheel unit and a top for mounting a handlebar, a top tube having a first end pivotally mounted on an upper end of the head tube by a first pivot unit, a rear tube having an end pivotally mounted on a second end of the top tube by a second pivot unit and having a rear bent portion for mounting a rear wheel unit and a front straight portion provided with a bottom bracket having a bottom provided with a mounting frame, a bottom tube having a first end pivotally mounted on a lower end of the head tube by a first pivot device and a second end pivotally and eccentrically mounted on the mounting frame of the bottom bracket by a second pivot device, and a quick release device mounted on the bottom tube and detachably locked on the bottom bracket to control connection between the rear tube and the bottom tube.

Preferably, the bottom tube and the rear tube are folded upward after the quick release device is unlocked from the bottom bracket, so that the head tube and the top tube are moved inward to shorten the distance between the front wheel unit and the rear wheel unit, thereby folding the bicycle.

The bicycle can be folded by pushing the bottom tube and the rear tube upward, so that the bicycle is folded easily and rapidly, thereby facilitating the user folding and unfolding the bicycle.

The front wheel unit and the rear wheel unit are movable after the bicycle is folded, so that the bicycle can be moved by the user after being folded, thereby saving the manual work.

Further benefits and advantages of the present invention will become apparent after a careful reading of the detailed description with appropriate reference to the accompanying drawings.

In the drawings :
Fig. 1 is a partially exploded perspective view of a foldable bicycle in accordance with the preferred embodiment of the present invention.
Fig. 2 is a perspective assembly view of the foldable bicycle as shown in Fig. 1.
Fig. 3 is a schematic operational view of the foldable bicycle as shown in Fig. 2.
Fig. 4 is a partially plan cross-sectional view of the foldable bicycle as shown in Fig. 2.
Fig. 5 is a schematic operational view of the foldable bicycle as shown in Fig. 4.
Fig. 6 is a schematic operational view of the foldable bicycle as shown in Fig. 5.
Fig. 7 is a schematic operational view of the foldable bicycle as shown in Fig. 6.
Fig. 8 is a schematic plan folded view of the foldable bicycle as shown in Fig. 2.
Fig. 9 is a schematic operational view of the foldable bicycle as shown in Fig. 8.

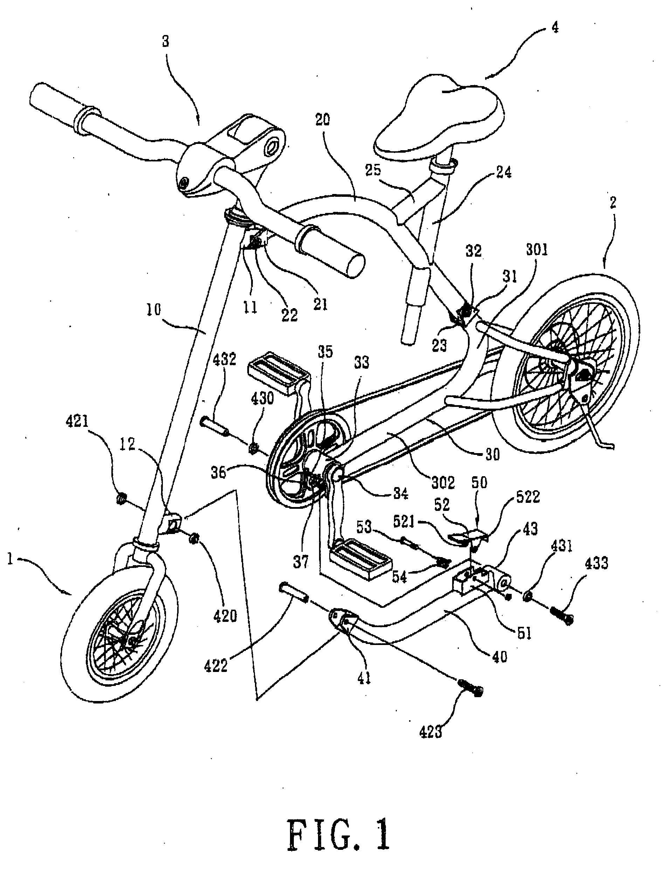

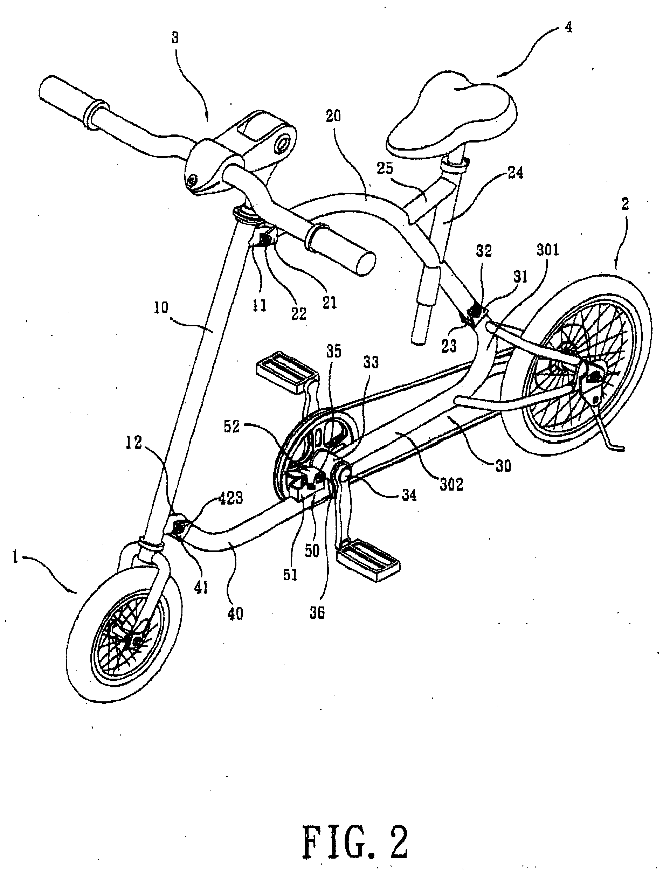

Referring to the drawings and initially to Figs. 1-4, a foldable bicycle in accordance with the preferred embodiment of the present invention comprises a frame for mounting a front wheel unit 1, a rear wheel unit 2, a handlebar 3, a seat 4, a transmission mechanism and a brake system.

The frame includes a head tube 10, a top tube 20, a rear tube 30, a bottom tube 40, and a quick release device 50.

The head tube 10 has a bottom for mounting the front wheel unit 1 and a top for mounting the handlebar 3. The head tube 10 has an upper end provided with an upper pivot seat 11 and a lower end provided with a lower pivot seat 12.

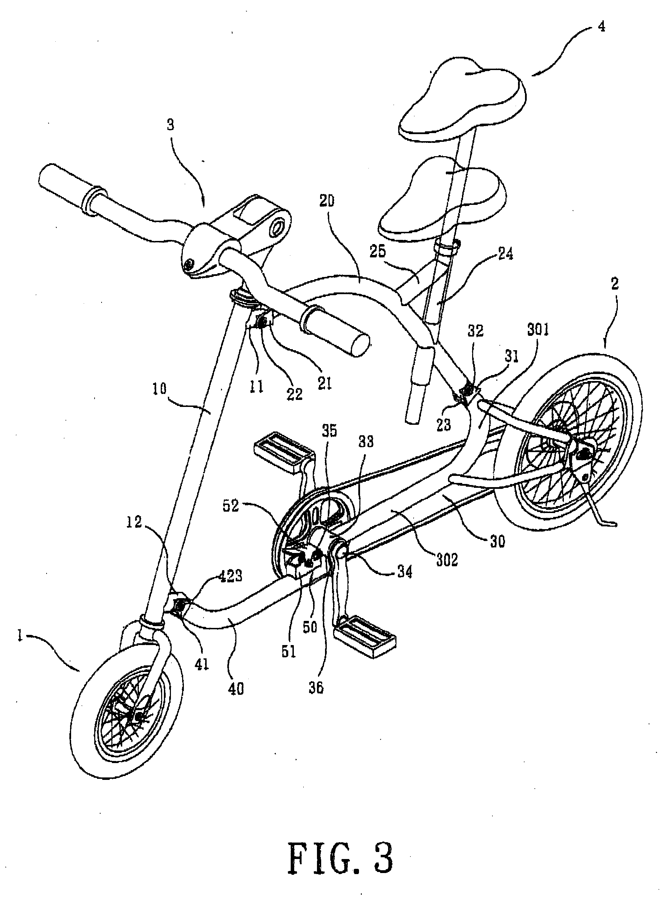

The top tube 20 has a first end provided with a forked pivot ear 21 pivotally mounted on the upper pivot seat 11 of the head tube 10 by a pivot unit 22 so that the first end of the top tube 20 is pivotally mounted on the upper end of the head tube 10 and a substantially arc-shaped second end provided with a pivot base 23. A seat tube 24 is mounted on the top tube 20 for mounting the seat 4 which is adjustably mounted on the seat tube 24 to adjust the height of the seat 4 as shown in Fig. 3. A reinforcing tube 25 is mounted between the seat tube 24 and the top tube 20 to reinforce the structural strength of the seat tube 24.

The rear tube 30 has an end provided with a forked pivot ear 31 pivotally mounted on the pivot base 23 of the top tube 20 by a pivot unit 32 so that the rear tube 30 is pivotally mounted on the second end of the top tube 20. The rear tube 30 has a rear bent portion 301 for mounting the rear wheel unit 2 and a front straight portion 302 provided with a bottom bracket 33 directed toward the front wheel unit 1, A crank shaft 34 is pivotally mounted in the bottom bracket 33 for mounting the transmission mechanism so that the crank shaft 34 is stepped by a rider to drive the transmission mechanism to move the front wheel unit 1. The bottom bracket 33 has a periphery formed with a locking groove 35 and has a bottom provided with a mounting frame 36. The mounting frame 36 has a bottom formed with a mounting hole 37.

The bottom tube 40 has a first end provided with a forked pivot ear 41 pivotally mounted on the lower pivot seat 12 of the head tube 10 by a first pivot device so that the first end of the bottom tube 40 is pivotally mounted on the lower end of the head tube 10. The lower pivot seat 12 of the head tube 10 has a through hole. The first pivot device of the bottom tube 40 includes two bearings 420 and 421 mounted in the through hole of the lower pivot seat 12, a threaded tube 422 extended through the pivot ear 41 of the bottom tube 40 and the two bearings 420 and 421 in the lower pivot seat 12 of the head tube 10, and a bolt 423 screwed into the threaded tube 422, so that the two sides of the pivot ear 41 of the bottom tube 40 are clamped by the head of the threaded tube 422 and the head of the bolt 423 respectively to facilitate a smooth rotation of the pivot ear 41 of the bottom tube 40. Thus, the first end of the bottom tube 40 is pivotally mounted on the lower end of the head tube 10 stably.

The bottom tube 40 has a second end provided with a pivot portion 43 pivotally mounted in the mounting hole 37 of the mounting frame 36 by a second pivot device so that the second end of the bottom tube 40 is pivotally mounted on the bottom of the bottom bracket 33. The pivot portion 43 of the bottom tube 40 has a through hole. The second pivot device of the bottom tube 40 includes two bearings 43 0 and 431 mounted in the through hole of the pivot portion 43 of the bottom tube 40, a threaded tube 422 extended through the mounting frame 36 and the two bearings 430 and 431 in the pivot portion 43 of the bottom tube 40, and a bolt 433 screwed into the threaded tube 432, so that the two sides of the mounting frame 36 are clamped by the head of the threaded tube 432 and the head of the bolt 433 respectively to facilitate a smooth rotation of the pivot portion 43 of the bottom tube 40. Thus, the second end of the bottom tube 40 is eccentrically and pivotally mounted on the bottom of the bottom bracket 33 of the rear tube 30 stably.

Similarly, the pivot unit 22 between the top tube 20 and the head tube 10 has a structure the same as that of the first pivot device and the second pivot device of the bottom tube 40. Similarly, the pivot unit 32 between the rear tube 30 and the top tube 20 has a structure the same as that of the first pivot device and the second pivot device of the bottom tube 40.

The quick release device 50 is mounted on the bottom tube 40 and locked in the locking groove 35 of the bottom bracket 33 to control connection between the rear tube 30 and the bottom tube 40. The quick release device 50 includes a housing 51 mounted on the bottom tube 40 and located adjacent to the pivot portion 43 of the bottom tube 40, a locking member 52 pivotally mounted on a top face of the housing 51 and having a first end formed with a downward extended bent locking portion 522 detachably locked in the locking groove 35 of the bottom bracket 33, a torsion spring 54 mounted in the housing 51 and having a first end urged on the bottom tube 40 and a second end urged on a second end of the locking member 52 to push the locking portion 522 of the locking member 52 downward so that the locking portion 522 of the locking member 52 is normally locked in the locking groove 35 of the bottom bracket 33, and a shaft 53 extended through the housing 51 and the torsion spring 54 so that the torsion spring 54 is pivotally mounted in the housing 51, The locking member 52 has a mediate portion formed with two downward extended ears 521 pivotally mounted on the housing 51 by the shaft 53.

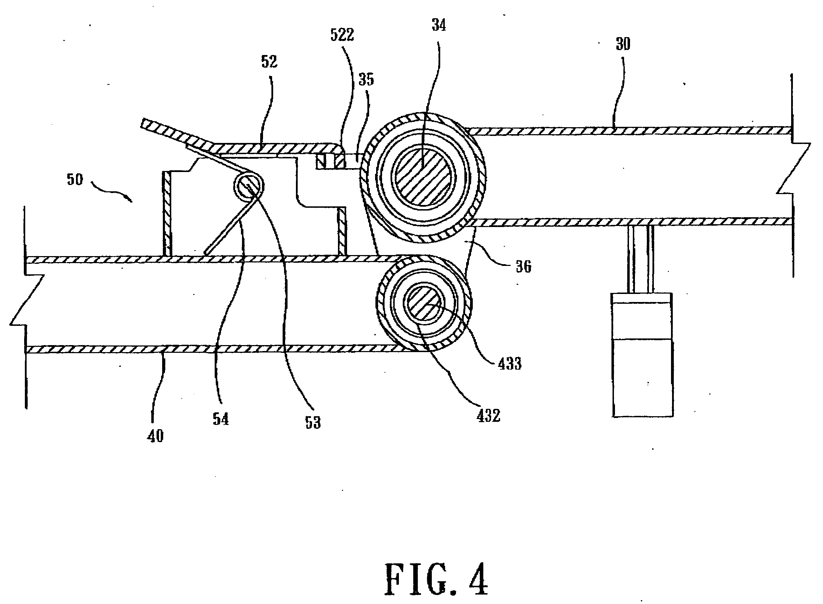

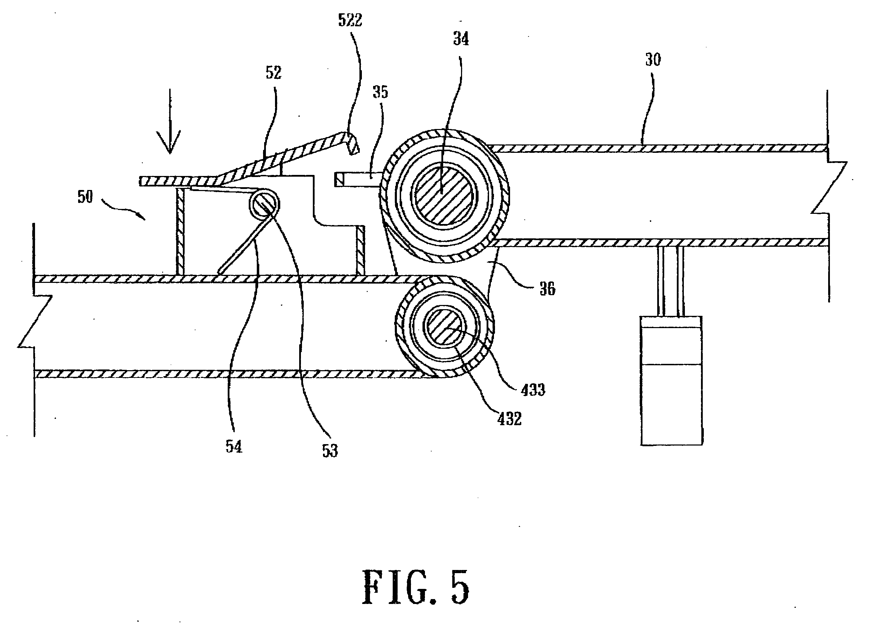

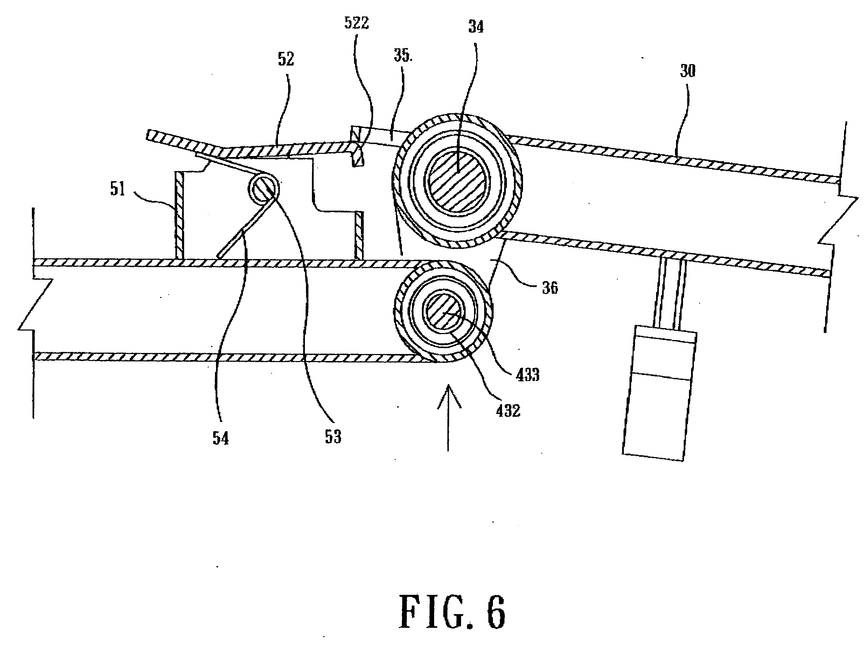

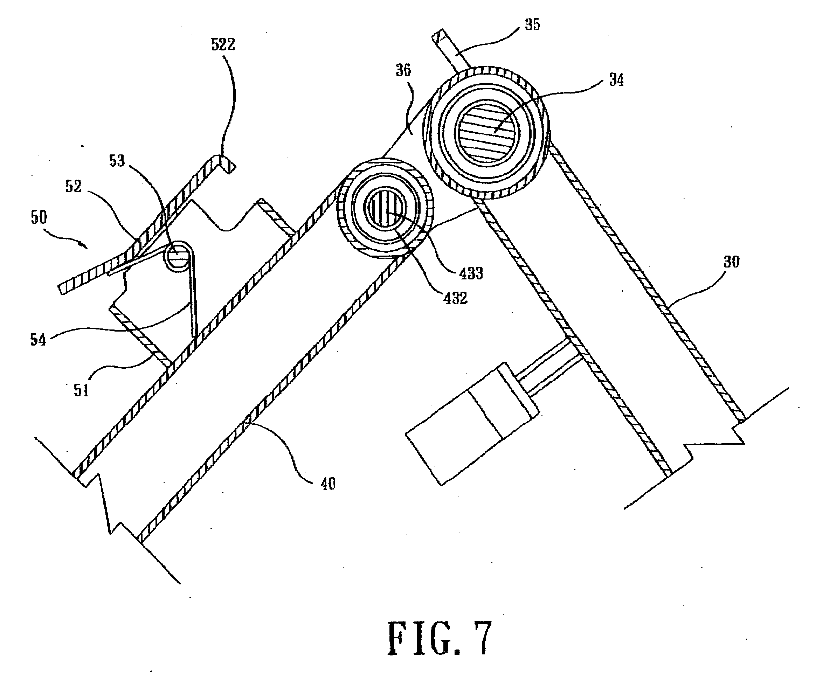

As shown in Figs. 4-7, when the second end of the locking member 52 is pressed downward to overcome the elastic force of the torsion spring 54, the locking portion 522 of the locking member 52 is detached from the locking groove 35 of the bottom bracket 33, thereby unlocking the bottom tube 40 from the bottom bracket 33 of the rear tube 30, so that the bottom tube 40 and the rear tube 30 can be pivoted freely.

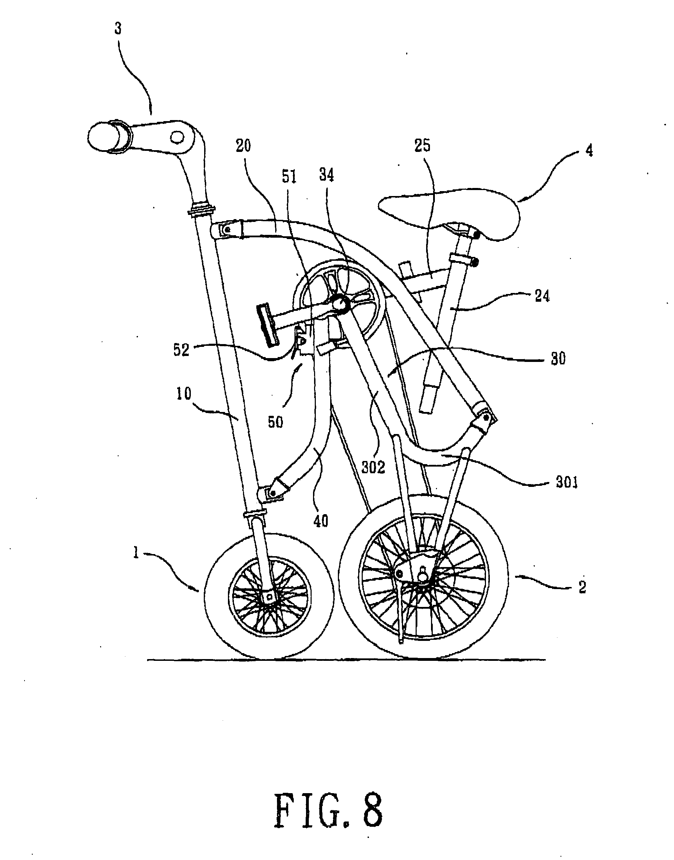

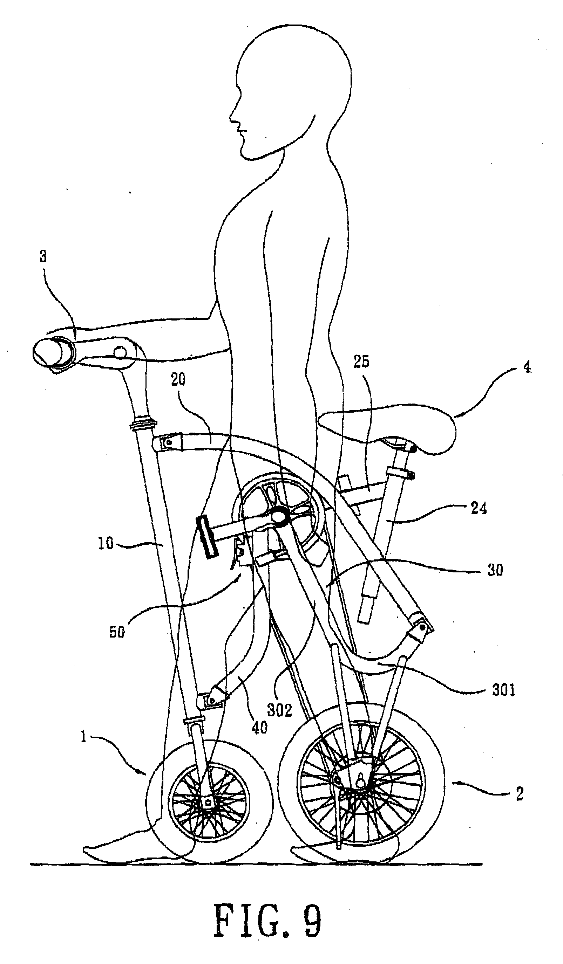

As shown in Figs. 8 and 9, when the bottom tube 40 and the rear tube 30 are pivoted upward after the quick release device 50 is unlocked, the bottom tube 40 and the rear tube 30 are folded upward, so that the head tube 10 and the top tube 20 are moved inward toward each other to shorten the distance between the front wheel unit 1 and the rear wheel unit 2, thereby folding the bicycle.

In such a manner, the head tube 10, the top tube 20, the rear tube 30 and the bottom tube 40 form a four-linkage mechanism, and the rear tube 30 and the bottom tube 40 are not connected co-axially by provision of the mounting frame 36, so that the quick release device 50 is closely locked in the locking groove 35 of the bottom bracket 33 to lock the rear tube 30 and the bottom tube 40 closely. In addition, when a rider is riding the bicycle, most of the rider's weight is concentrated on the bottom bracket 33, while the bottom tube 40 is eccentrically mounted on the bottom of the bottom bracket 33, so that the head tube 10, the top tube 20, the rear tube 30 and the bottom tube 40 form a fixing state rigidly and stably, thereby facilitating the rider riding the bicycle.

Accordingly, after the quick release device 50 is unlocked from the bottom bracket 33, the bottom tube 40 and the rear tube 30 are folded upward, so that the head tube 10 and the top tube 20 are moved inward to shorten the distance between the front wheel unit 1 and the rear wheel unit 2, thereby folding the bicycle. In addition, the front wheel unit 1 and the rear wheel unit 2 are movable after the bicycle is folded, so that the bicycle can be moved by the user after being folded, thereby saving the manual work, Further, the bicycle can be folded by pushing the bottom tube 40 and the rear tube 30 upward, so that the bicycle is folded easily and rapidly, thereby facilitating the user folding and unfolding the bicycle.

## Claims

1. A foldable bicycle, comprising a frame including:
a head tube (10) having a bottom for mounting a front wheel unit (1) and a top for mounting a handlebar (3);
a top tube (20) having a first end pivotally mounted on an upper end of the head tube by a first pivot unit (22);
a rear tube (30) having an end pivotally mounted on a second end of the top tube by a second pivot unit (32) and having a rear bent portion (301) for mounting a rear wheel unit (2) and a front straight portion (302) provided with a bottom bracket (33) having a bottom provided with a mounting frame (36);
a bottom tube (40) having a first end pivotally mounted on a lower end of the head tube by a first pivot device and a second end pivotally and eccentrically mounted on the mounting frame of the bottom bracket by a second pivot device;
a quick release device (50) mounted on the bottom tube and detachably locked on the bottom bracket to control connection between the rear tube and the bottom tube.

2. The foldable bicycle in accordance with claim 1,
**characterised in that**
the bottom tube and the rear tube are folded upward after the quick release device is unlocked from the bottom bracket, so that the head tube and the top tube are moved inward to shorten the distance between the front wheel unit and the rear wheel unit, thereby folding the bicycle.

3. The foldable bicycle in accordance with claim 2,
**characterised in that**
the front wheel unit and the rear wheel unit are movable after the bicycle is folded, so that the bicycle is movable after being folded.

4. The -foldable bicycle in accordance with one of the preceding claims,
**characterised in that**
the end of the top tube is substantially arc-shaped.

5. The foldable bicycle in accordance with one of the preceding claims,
**characterised by**
a seat tube (24) mounted on the top tube for mounting a seat (4), and a reinforcing tube (25) mounted between the seat tube and the top tube.

6. The foldable bicycle in accordance with one of the preceding claims,
**characterised in that**
the bottom bracket has a periphery formed with a locking groove (35), and the quick release device includes a housing (51) mounted on the bottom tube, a locking member (52) pivotally mounted on a top face of the housing and having a first end formed with a downward extended bent locking portion (522) detachably locked in the locking groove of the bottom bracket, and a torsion spring (54) mounted in the housing and having a first end urged on the bottom tube and a second end urged on a second end of the locking member to push the locking portion (522) of the locking member downward so that the locking portion of the locking member is normally locked in the locking groove of the bottom bracket.

7. The foldable bicycle in accordance with claim 6,
**characterised in that**
the quick release device further includes a shaft (53) extended through the housing and the torsion spring so that the torsion spring is pivotally mounted in the housing.

8. The foldable bicycle in accordance with claim 7,
**characterised in that**
the locking member has a mediate portion formed with two downward extended ears (521) pivotally mounted on the housing by the shaft.

9. The foldable bicycle in accordance with one of the preceding claims,
**characterised in that**
the lower end of the head tube is provided with a lower pivot seat (12), the lower pivot seat of the head tube has a through hole, the first end of the bottom tube is provided with a forked pivot ear (41) pivotally mounted on the lower pivot seat of the head tube by the first pivot device, the first pivot device of the bottom tube includes two bearings (420,421) mounted in the through hole of the lower pivot seat, a threaded tube (422) extended through the pivot ear of the bottom tube and the two bearings in the lower pivot seat of the head tube, and a bolt (423) screwed into the threaded tube, so that the two sides of the pivot ear of the bottom tube are clamped by the head of the threaded tube and the head of the bolt respectively.

10. The foldable bicycle in accordance with one of the preceding claims,
**characterised in that**
the mounting frame has a bottom formed with a mounting hole (37), the second end of the bottom tube is provided with a pivot portion pivotally mounted in the mounting hole of the mounting frame by the second pivot device, the pivot portion of the bottom tube has a through hole, the second pivot device of the bottom tube includes two bearings (430,431) mounted in the through hole of the pivot portion of the bottom tube, a threaded tube (432) extended through the mounting frame and the two bearings in the pivot portion of the bottom tube, and a bolt (433) screwed into the threaded tube, so that the two sides of the mounting frame are clamped by the head of the threaded tube and the head of the bolt respectively.
